# EUROPÄISCHE PATENTANMELDUNG

(11) **EP 0 989 725 A2**
(43) Veröffentlichungstag der Anmeldung: **29.03.2000**
(21) Anmeldenummer: 99113236.6
(22) Anmeldetag: 08.07.1999
(51) Int. Cl.: H04M 11/04, H04Q 7/20

(54) **Vorrichtung und Verfahren zum sicheren Übermitteln von Notrufen**

(30) Priorität: 13.08.1998 DE 19836594
(71) Anmelder: Deutsche Telekom AG, 53113 Bonn (DE)
(72) Erfinder: Pohen, Jürgen, Dipl.-Ing., 50858 Köln (DE)

(57) **Zusammenfassung**

Die Erfindung betrifft eine Vorrichtung zum sicheren Übermitteln und Quittieren von Notrufen bestehend aus Notrufbasistelefon (7) und dazu gehörendem tragbarem Notrufgeber (1), wobei der Notrufgeber mit dem Notrufbasistelefon über einen Vor- und Rückkanal (4) verbunden ist. Der Notrufgeber verfügt über Einrichtungen zum Signalisieren einer Notrufquittung. Weiterhin behandelt die Erfindung ein Verfahren zur Übermittlung und Quittierung eines Notrufes.

## Beschreibung

Die Erfindung betrifft eine Vorrichtung und ein Verfahren zum sicheren Absetzen von Notrufen vorzugsweise mittels eines kleinen, am Körper tragbaren Notrufgebers.

Die Möglichkeit, ohne umständliche Wahlprozeduren und dem Betätigen von oft kleinen und schwergängigen Tasten auf eine Notlage aufmerksam zu machen und Hilfe herbeizurufen, wird von vielen Personenkreisen benötigt. Sowohl Behinderte als auch ältere Menschen sind auf Einrichtungen zum Absetzen von Notrufen angewiesen.

Bei den derzeit verfügbaren Telefonen zum Absetzen von Notrufen wird dieser am Telefon oder durch einen dazugehörigen tragbaren Sender aktiviert. Ein daraus resultierender Rückruf läuft aber nur am Telefon zu Kontrollzwecken auf. Er kann nur dort abgehört werden.

Die eingesetzten tragbaren Notrufgeber zeigen das Eintreffen des Rückrufes nicht an. Dies ist nachteilig, wenn sich die hilfsbedürftige Person nicht in Hörweite des Notrufbasistelefones befindet und zum Erkennen einer Notrufquittung den Standort des Telefons aufsuchen muß. Bei einem Unfall oder Schwächeanfall ist das nicht immer möglich.

Aufgabe der vorliegenden Erfindung ist daher, eine Vorrichtung und ein Verfahren zur Notrufübermittlung anzugeben, welche eine sichere Übermittlung und Quittierung eines Not- oder Servicerufes ermöglicht.

Diese Aufgabe wird in Verbindung mit dem Oberbegriff des Patentanspruchs 1 erfindungsgemäß dadurch gelöst, daß durch geeignete Maßnahmen das Eintreffen eines Notrufes in einer Notrufabfragestelle oder an einem beliebigen anderen Endgerät beim Anrufenden am Notrufbasistelefon und am Notrufgeber signalisiert wird.

Die Vorrichtung zur Abgabe des Notrufes besteht aus einem speziellen Notrufbasistelefon und einem tragbaren Notrufgeber, welcher von einer gefährdeten Person immer getragen werden kann.

Eine in Not befindliche Person betätigt zunächst eine klar gekennzeichnete Notruftaste. Dies ist gegenüber der Bedienung einer ganzen Tastatur vorteilhaft, da Fehlbedienungen weitgehend ausgeschlossen werden. In einem vorher einprogrammierten automatischen Wahlverfahren wird nun eine Notrufabfragestelle angewählt. Möglich ist auch die sequentielle Anwahl mehrerer Notrufabfragestellen mit verschiedenen Rufnummern. Wird in der Notrufabfragestelle der Anruf entgegengenommen, wird dorthin eine Ansage übermittelt, wie der Notruf zu quittieren ist. Die Rückmeldung der Notrufabfragestelle wird im Notrufbasistelefon ausgewertet und eine entsprechende Signalisierung als Quittierung des Notrufes abgegeben.

Weitere Einzelheiten der Erfindung werden in der Zeichnung anhand von schematisch dargestellten Ausführungsbeispielen beschrieben.

Dabei zeigen:
**Figur 1** die Anbindung des Notrufbasistelefons an ein Telekommunikationsnetz
**Figur 2** den Ablauf einer Notrufauslösung mit Quittierung

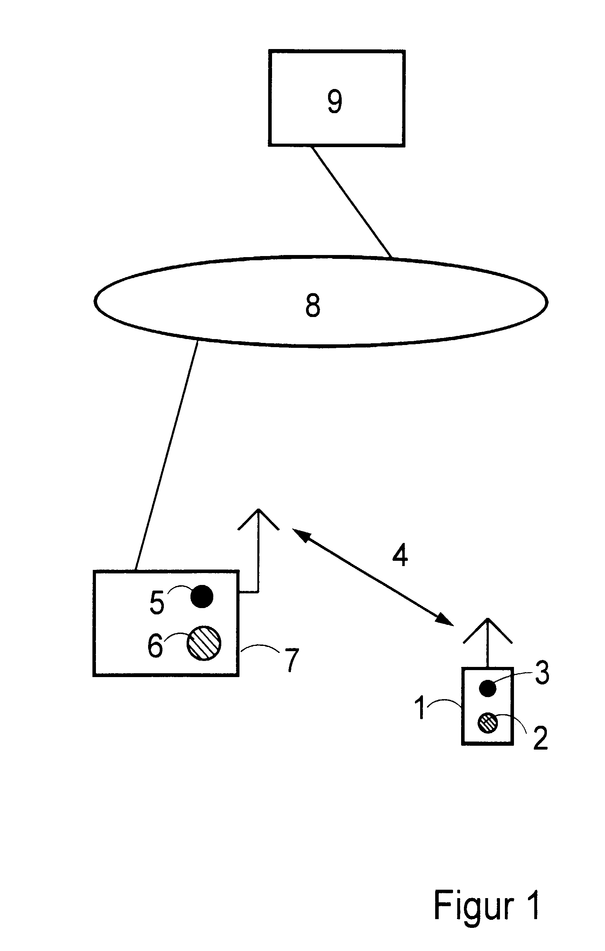

Wie in **Figur 1** dargestellt kann das Absenden eines Notrufes sowohl vom Notrufbasistelefon **7** mit der Notruftaste **5** oder auch vom tragbaren Notrufgeber **1** mittels der Notruftaste **3** über eine Duplexfunkverbindung **4** erfolgen. Um im Noffall Fehlbedienungen möglichst auszuschließen, sind die Nottaster **3** und **5** am Notrufgeber und an der Notrufbasistelefon klar gekennzeichnet angebracht. Das Notrufbasistelefon kann über ein Telekommunikationsnetz **8**, welches sowohl ein Festnetz oder auch ein Funknetz sein kann, mit einer Notrufabfragestelle **9** in Verbindung treten. Da in der erfindungsgemäßen Anordnung zwischen Notrufgeber **1** und Notrufabfragestelle **9** eine durchgehende Duplexverbindung besteht, sind Rückmeldungen möglich. Signalgeber **6** im Notrufbasistelefon und Signalgeber **2** im Notrufgeber dienen zur Meldung der Notrufquittung. Diese kann aus voreingestellten Texten aus einem Sprachspeicher bestehen. Weiterhin ist vorteilhaft, daß über die Duplexverbindung **4** in regelmäßigen Abständen überwacht werden kann, ob die Funkverbindung zum Notrufbasistelefon noch ausreichend ist und ein sicheres Absetzen eines Notrufes möglich ist.

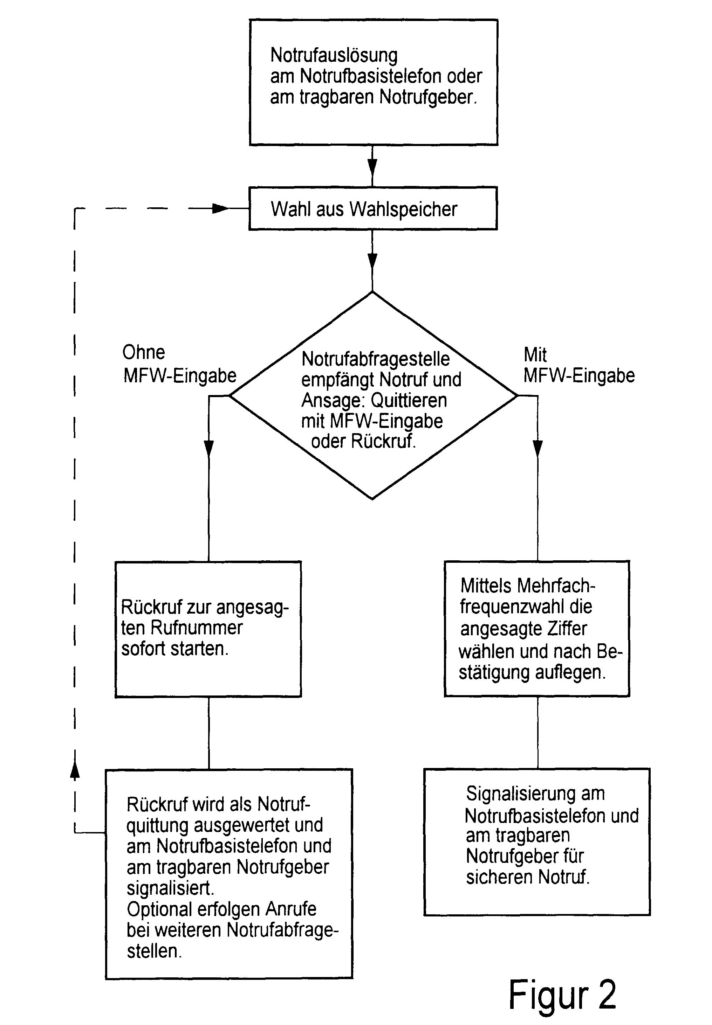

**Figur 2** zeigt oben beginnend den Ablauf einer Notrufübermittlung. Zunächst erfolgt eine Betätigung eines Notruftaster am Notrufbasistelefon oder am Notrufgeber. Der Anruf wird in der Notrufzentrale oder an einem beliebigen Telefon entgegengenommen. Die Ansage fordert auf, eine Ziffer oder Ziffernfolge als Mehrfachfrequenzwahl (MFW) zurückzusenden und eine Bestätigung abzuwarten oder, falls dies aus technischen Gründen nicht möglich ist, sofort einen Rückruf einzuleiten. Die Rufnummer für den Rückruf wird dabei angesagt. Im Falle der MFW-Antwort liegt eine gesicherte Quittung als Antwort am Notrufbasistelefon vor und kann von dort aus signalisiert werden oder an den Notrufgeber übermittelt und dort als optisches, akustisches oder auch körperlich spürbar als Vibrationssignal angezeigt werden. Im Falle des Ausbleibens der MFV-Antwort wird die Verbindung nach einer vorgegebenen Zeit von etwa 15 Sekunden abgebrochen und auf einen Rückruf gewartet. Erfolgt dieser in einer ebenso vorgegebenen Zeitspanne von etwa 30 Sekunden, wird er als Notrufquittierung ausgewertet. Die Sicherheit ist in diesem Rückrufverfahren nicht so hoch wie bei der MFW-Eingabe durch die Notrufabfragestelle. Daher können optional noch zu anderen Notrufabfragestellen Verbindungen aufgebaut werden, bis eine MFV-Antwort empfangen wird.

### Bezugszeichenliste

- 1: Notrufgeber
- 2: Signalgeber
- 3: Notruftaste
- 4: Duplex-Funkübertragung
- 5: Notruftaste am Notrufbasistelefon
- 6: Signalgeber am Notrufbasistelefon
- 7: Notrufbasistelefon
- 8: Telekommunikationsnetz
- 9: Notrufabfragestelle

## Patentansprüche

1. Vorrichtung zum sicheren Übermitteln und Quittieren von Notrufen bestehend aus Notrufbasistelefon (7) und tragbarem Notrufgeber (1) mit je einer klar gekennzeichneten Notruftaste (3 und 5), **dadurch gekennzeichnet,** daß der Notrufgeber mit dem Notrufbasistelefon drahtlos über einen Vor- und Rückkanal verbunden ist.

2. Vorrichtung nach Anspruch 1, **dadurch gekennzeichnet,** daß der Notrufgeber über Signalgeber auf akustischer, optischer und körperlich spürbarer Basis oder beliebiger Kombinationen hiervon verfügt.

3. Vorrichtung nach Anspruch 1 oder 2, **dadurch gekennzeichnet,** daß aus einem Wahlspeicher mehrere Notrufnummern abgerufen werden können.

4. Vorrichtung nach einem oder mehreren der Ansprüche 1 bis 3, **dadurch gekennzeichnet,** daß jeder Notrufnummer eine Ansage zugeordnet ist.

5. Verfahren zur sicheren Übermitteln eines Notrufes an eine Notrufabgfragestelle oder an ein beliebiges Endgerät, **dadurch gekennzeichnet,** daß die folgenden Verfahrensschritte durchlaufen werden:
5.1 Senden eines Notrufes durch Betätigen der Notruftaste am transportablen Notrufgeber (1) oder am Notrufbasistelefon (7) über ein Telekommunikationsnetz (8) an eine Notrufabfragestelle (9).
5.2 Entgegennahme des Notrufes durch die Notrufabfragestellestelle (9).
5.3 Senden einer Ansage aus dem Sprachspeicher des Notrufbasistelefons (7).
5.4 Quittierung des Notrufes von der Notrufabfragestellestelle durch Eingabe einer Sequenz im Mehrfachfrequenz-Tonwahlverfahren oder
5.5 Sofortiger Rückruf der Notrufabfragestelle (9) als Notrufquittung, wenn Mehrfachfrequenz-Tonwahlverfahren nicht möglich ist.
5.6 Signalisierung der Notrufquittung am Notrufbasistelefon (7) und am tragbaren Notrufgeber (1).
